# EUROPEAN PATENT SPECIFICATION

(11) **EP 4 593 157 B1**
(45) Date of publication and mention of the grant of the patent: **21.10.2026**
(21) Application number: 24196957.5
(22) Date of filing: 28.08.2024
(51) Int. Cl.: H01M 10/613, H01M 10/647, H01M 10/653, H01M 10/654, H01M 10/655, H01M 50/531

(54) **SECONDARY BATTERY INCLUDING THE HEAT TRANSFER DEVICE**
SEKUNDÄRBATTERIE MIT DER WÄRMEÜBERTRAGUNGSVORRICHTUNG
BATTERIE SECONDAIRE AVEC LE DISPOSITIF DE TRANSFERT THERMIQUE

(30) Priority: 29.01.2024 KR 20240013502
(43) Date of publication of application: 30.07.2025
(73) Proprietor: SAMSUNG SDI CO., LTD., Giheung-gu Yongin-si, Gyeonggi-do 17084 (KR)
(72) Inventor: Park, Soohwan, 17084 Yongin-si, Gyeonggi-do (KR); Lee, Choonghoon, 17084 Yongin-si, Gyeonggi-do (KR); Ahn, Gijang, 17084 Yongin-si, Gyeonggi-do (KR)
(74) Representative: Gulde & Partner

(56) References cited:
- EP-A1- 4 216 341

## Description

### BACKGROUND

### 1. Technical Field

The present invention relates to a secondary battery including a heat transfer device to directly transfer heat inside the secondary battery to a casing. The invention further relates to a secondary battery module with the secondary battery comprising the heat transfer device according to the invention.

### 2. Related Art

Unlike primary batteries that are not designed to be charged, secondary batteries are designed to be discharged and recharged. Low-capacity secondary batteries may be used in small portable electronic devices, such as smart phones, feature phones, notebook computers, digital cameras, and camcorders, while large-capacity secondary batteries are widely used as power sources for driving motors, such as of hybrid vehicles or electric vehicles, batteries for power storage, or the like.

A secondary battery typically includes an electrode assembly composed of a positive electrode and a negative electrode, a casing for accommodating the electrode assembly, a terminal part connected to the electrode assembly, various parts connecting the terminal part and the electrode assembly, and so on, which generate a lot of heat.

The above information is only intended to improve understanding the background of the present invention, and therefore may also include information that does not constitute prior art. EP 4 216 341 A1 discloses a battery cell comprising a heat-conducting component that is connected to the electrode plates and the casing.

### SUMMARY

The invention is defined by the appended claims. The description that follows is subjected to this limitation. Any disclosure lying outside the scope of said claims is only intended for illustrative as well as comparative purposes.

The various parts connecting the terminal part and the electrode assembly of the secondary battery, especially a joint between an electrode body and a subplate in the secondary battery generates a lot of heat, which may cause breakage of the secondary battery. Moreover, a temperature increase in the secondary battery may affect the performance of the secondary battery. Accordingly, one or more embodiments herein describe a heat transfer structure provided within a secondary battery to prevent temperature increases and thereby prevent degradation in performance of the secondary battery.

In a first aspect, a heat transfer device includes a first body installed between a casing of a secondary battery and a joint between a current collector and a subplate in the secondary battery, wherein the first body includes a first contact surface in contact with the joint to receive heat from the joint, and a second contact surface formed opposite the first contact surface, the second contact surface being in contact with the casing to transfer heat from the first contact surface to the casing. In other words, the heat transfer device includes a first body configured to be installed between a casing of a secondary battery and a joint that is between a current collector and a subplate in the secondary battery. The first body includes a first contact surface configured to contact the joint to receive heat from the joint and a second contact surface formed opposite to the first contact surface, the second contact surface being configured to contact the casing to transfer heat from the first contact surface to the casing.

The heat transfer device may comprise a second body extending from the first body and being configured to surround the joint.

The heat transfer device may comprise a fastener configured to fasten the first body and the second body to prevent separation of the first body and the second body from the joint.

The heat transfer device may be made of at least one material selected from polycarbonate, PC, and polyphenylene sulfide, PPS.

The heat transfer device may have a thermal conductivity of 0.2 to 2 W/(m*K) if it is made of polycarbonate, and a thermal conductivity of 0.3 to 10 W/(m*K) if it is made of polyphenylene sulfide.

The heat transfer device may have a thermal conductivity of 2 W/(m*K) or more.

The heat transfer device may be made of at least one material having a thermal conductivity of 0.2 to 10 W/(m*K), preferably 2.0 to 10 W/(m*K), more preferably 5.0 to 10 W/(m*K).

In a second aspect, there is provided a secondary battery with a heat transfer device, which includes a casing configured to accommodate an electrode assembly, a terminal part connected to the electrode assembly, and the heat transfer device installed between the casing and a joint between a current collector and a subplate connecting the electrode assembly and the terminal part, to transfer heat from the joint to the casing. The secondary battery may comprise a plurality of the heat transfer devices. In other words, the secondary battery with a heat transfer device includes a casing configured to accommodate an electrode assembly, a terminal part connected to the electrode assembly, a subplate connecting the electrode assembly and the terminal part and a current collector. The heat transfer device is installed between the casing and a joint that is between the current collector and the subplate, wherein the heat transfer device is configured to transfer heat from the joint to the casing.

The secondary battery comprises a heat transfer device according to the invention, which is described above.

The heat transfer device of the secondary battery comprises a first body installed **between** the joint and the casing, wherein the first body comprises a first contact surface in contact with the joint and configured to receive heat from the joint, and a second contact surface formed opposite the first contact surface, the second contact surface being in contact with the casing and being configured to transfer heat from the first contact surface to the casing.

The heat transfer device of the secondary battery may comprise a second body extending from the first body to surround the joint.

The heat transfer device of the secondary battery may comprise a fastener configured to fasten the first body and the second body to prevent separation of the first body and the second body from the joint.

The heat transfer device of the secondary battery may be made of at least one material selected from polycarbonate, PC, and polyphenylene sulfide, PPS.

The secondary battery may be a prismatic secondary battery.

According to one or more embodiments, the heat transfer device of the secondary battery may have one or more of the following dimensions: A first dimension, number ①, which refers to a dimension of the thickness of the second body, may be less than the distance between a separator of the electrode assembly and the joint between the current collector and the subplate since the separator should not be pressed in consideration of safety; a second dimension, Number ②, which refers to a dimension of the thickness of the first body, may match the distance between the casing and the joint between the current collector and the subplate to effectively transfer heat from the joint to the casing; a third dimension, Number ③, which refers to a dimension of the distance between the joint and the heat transfer device at a connection between the first body and the second body and the casing, may be designed so that the joint and the heat transfer device at the connection between the first body and the second body and the casing are spaced apart, thereby resulting in interference with dissipation of heat and causing a risk of breakage; a fourth dimension, Number ④, which refers to a dimension of the thickness of a **connection** between the first body and the second body, may be set so as not to be in contact at this area with the casing, a fifth dimension, Number ⑤, which refers to the fastener of the heat transfer device, may have a thickness set so as not to be in contact with the casing so as not to be in contact with the casing like the dimension in number ④; a sixth dimension, Number ⑥, which refers to a dimension of the thickness of a part of the first body that is in contact with the casing, may be less than the length of a straight part of the casing in the cross section thereof since it should not be affected by the curved surface of the casing; and/or a seventh dimension, number ⑦, which refers to a dimension of a height of the first body, may be less than the length of the joint where the current collector and the subplate are connected.

In a third aspect, there is provided a secondary battery module comprising a plurality of the secondary batteries comprising the heat transfer device according to the invention, wherein the plurality of secondary batteries is arranged and connected transversely or longitudinally.

In a fourth aspect, there is provided a vehicle including secondary battery packs manufactured by means of the secondary battery with a heat transfer device according to the invention having the above-mentioned configuration. The secondary battery may comprise a plurality of the heat transfer devices.

According to one or more embodiments of the present invention, the heat transfer device is installed between the casing of the secondary battery and the joint between the current collector and the subplate in the secondary battery to transfer heat generated at the joint to the casing. Therefore, it is possible to prevent degradation in performance of the secondary battery due to an increase in temperature therein.

In addition, in a vehicle employing the secondary battery including the heat transfer device according to the present invention, the deterioration in performance of the secondary battery can be prevented, resulting in an improvement in performance of the vehicle, such as mileage and output. Furthermore, it is possible to improve safety by preventing gas emissions and fires caused by the increase in temperature inside the secondary battery.

The present invention is not limited to the above effects, and other effects of the present invention will be clearly understood by those skilled in the art from the following description.

### BRIEF DESCRIPTION OF THE DRAWINGS

The accompanying drawings in the present specification show embodiments of the present invention, and are illustrated to help further understand the technical concept of the present invention and to further describe aspects and features of the present invention along with the detailed description of the present disclosure below. Thus, the present invention should not be construed as being limited by the aspects illustrated in the drawings.

The above and other aspects, features, and advantages of certain embodiments of the present invention will be more apparent from the following description taken in conjunction with the accompanying drawings, in which:
FIG. 1A is a top perspective view of a prismatic secondary battery;
FIG. 1B is a cross-sectional view taken along line I-I' of FIG. 1A;
FIG. 2A is an enlarged cross-sectional view illustrating a main part of a secondary battery that is able to employ a heat transfer device according to embodiments of the present invention;
FIG. 2B is a perspective view illustrating the main part of the secondary battery with no casing therefrom that is able to employ the heat transfer device according to embodiments of the present invention;
FIG. 3 is a view schematically illustrating a heat transfer device according to first embodiments of the present invention;
FIG. 4 is a view illustrating a state of application of the heat transfer device according to embodiments of the present invention to the secondary battery;
FIG. 5 is a view illustrating transfer of heat without application of the heat transfer device according to embodiments of the present invention;
FIG. 6 is a view illustrating transfer of heat with application of the heat transfer device according to embodiments of the present invention;
FIG. 7 is a graph illustrating a relationship between maximum temperature and heat flux with respect to the thermal conductivity of the heat transfer device according to embodiments of the present disclosure;
FIGS. 8A and 8B are views illustrating dimensions to be preferably considered in the heat transfer device according to embodiments of the present invention;
FIG. 9 is a view schematically illustrating a heat transfer device according to second embodiments of the present invention;
FIG. 10 is a view schematically illustrating a heat transfer device according to third embodiments of the present invention;
FIG. 11 is an exemplary view of a secondary battery module in which secondary batteries are arranged according to embodiments of the present invention;
FIG. 12 is an exemplary view of a secondary battery pack including the secondary battery module illustrated in FIG. 11; and
FIG. 13 is a conceptual view of a vehicle including the secondary battery pack illustrated in FIG. 12.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Exemplary embodiments of the present invention will be described below in detail with reference to the accompanying drawings. Prior to the description, it is noted that the terms or words used in this specification and claims should not be construed as being limited to common or dictionary meanings but instead should be understood to have meanings and concepts in agreement with the spirit of the invention based on the principle that an inventor can define the concept of each term suitably in order to describe his/her own invention in the best way possible. Accordingly, since the embodiments described in this specification and the configurations illustrated in the drawings are only an example of the present invention and they do not cover all the technical ideas of the present invention, it should be understood that various changes and modifications may be made.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present invention, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present invention relates to "one or more embodiments of the present invention". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present invention and is not intended to limit the present invention.

Examples of secondary batteries include a coin type, a cylindrical type, a prismatic type, and a pouch type. The present disclosure is basically applicable to a prismatic secondary battery. Therefore, a prismatic secondary battery will first be briefly described prior to description of embodiments of the present invention.

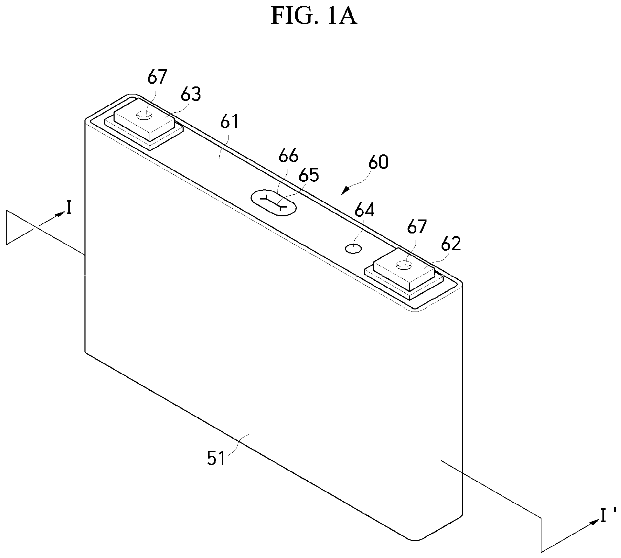

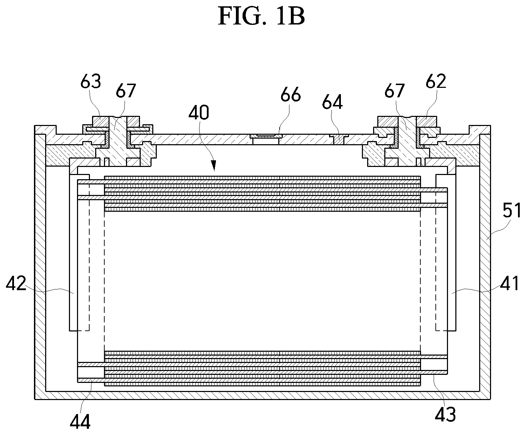

FIG. 1A is a top perspective view of a prismatic secondary battery. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides of a separator bent into a Z-stack. Furthermore, the electrode assembly 40 may include one or more electrode assemblies, which are stacked such that their long sides are adjacent to each other and accommodated in the casing, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without an application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, respectively, through terminal pins 67 as described with reference to FIG. 1A. In some embodiments, the terminal pins 67 may each have an outer peripheral surface that is threaded and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

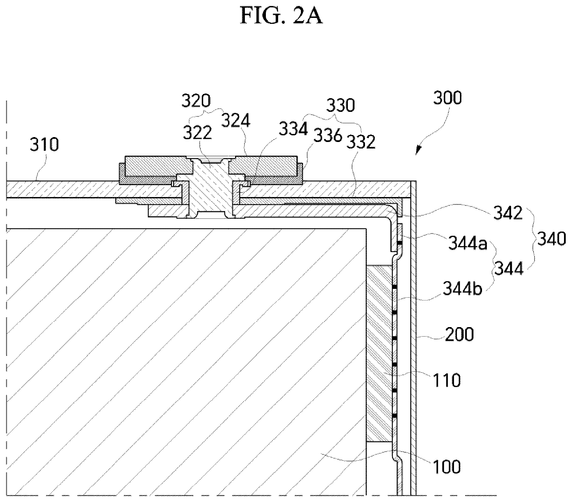

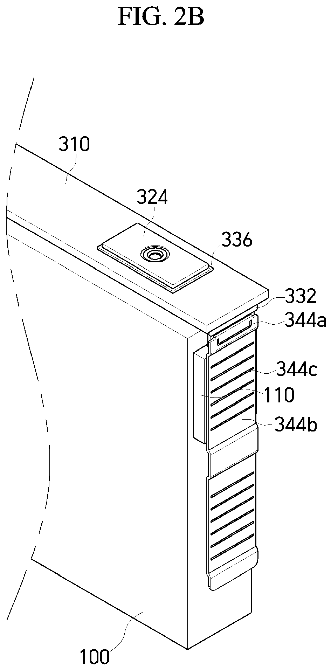

FIG. 2A is an enlarged cross-sectional view illustrating a main part of a secondary battery that is able to employ a heat transfer device according to embodiments of the present invention. FIG. 2B is a perspective view illustrating the main part of the secondary battery without casing that is able to employ the heat transfer device according to the embodiments of the present invention.

Referring to FIGS. 2A and 2B, the secondary battery may include an electrode assembly 100, a casing 200 for accommodating the electrode assembly 100, and a cap assembly 300 coupled to the casing 200.

The cap assembly 300 may include a cap plate 310 coupled to the casing 200, a terminal part 320, an insulating member 330, and a current collector part 340.

The cap plate 310 is in the form of a substantially rectangular plate. The cap plate 310 may be made of the same material as the casing 200. By way of example, the cap plate 310 may be sized to correspond to the inner size of the opening in the casing 200. The cap plate 310 may be coupled to the casing 200 by laser welding or the like, for example. The cap plate 310 may be formed with a terminal hole and a groove for coupling with the terminal part 320, a liquid injection hole, a vent hole for coupling with a vent, and the like. The vent serves to discharge gas by breaking when the internal pressure of the secondary battery increases, and the vent may employ a typical vent structure.

The terminal part 320 may include a terminal pin 322 and a terminal plate 324. The terminal part 320 may have a positive or negative polarity, and may have the same structure as that of FIGS. 2A and 2B regardless of the polarity.

The terminal pin 322 has a substantially cylindrical shape, and is electrically connected to the current collector 342 of the current collector part 340, which will be described later, to be electrically connected to the first or second electrode plate of the electrode assembly 100. During manufacturing, the lower portion of the terminal pin 322 may be sequentially inserted through the cap plate 310, the insulating plate 332, and the current collector 342 in a state in which the pin insulator 334 of the insulating member 330, which will be described later, is inserted into the cap plate 310. The terminal plate 324 may then be seated on the terminal pin 322, and the upper and lower ends of the terminal pin 322 may be pressed and deformed to fix the terminal pin 322 and the terminal plate 324 and fix the terminal pin 322 and the current collector 342. If necessary, the terminal pin 322 and the current collector 342 may be fixed by welding the lower end of the terminal pin 322 to a portion of the lower surface of the current collector 342.

The terminal plate 324 is disposed at the top of the terminal part 320, and is made of a conductive material to electrically connect the secondary battery to outside of the secondary battery. The terminal plate 324 has a substantially plate shape and may be disposed parallel to the top of the electrode assembly 100. The terminal plate 324 has a terminal hole formed therethrough for insertion of the terminal pin 322 through the terminal hole. The terminal plate 324 is seated on the terminal pin 322 with the terminal pin 322 inserted into the cap plate 310. The terminal plate 324 may then be coupled and fixed to the terminal pin 322 by pressing and deforming the upper end of the terminal pin 322.

The insulating member 330 includes an insulating plate 332, a pin insulator 334, and an upper insulator 336. The components of the insulating member may all be made of insulating materials and may be manufactured, for example, by injection molding.

The insulating plate 332 is in the form of a substantially rectangular plate. The insulating plate 332 is in close contact with the lower surface of the cap plate 310 to insulate the cap plate 310 and the electrode assembly 100 from each other. In addition, the insulating plate 332 serves to insulate a current collection structure, which will be described later, and the cap plate 310 from each other. Accordingly, the insulating plate 332 may have a side surface extending downward along the edge thereof. The side surface may be formed along the entire edge or only on a portion of the edge of the insulating plate 332. The insulating plate 332 may have a varying shape of surface or side with the shape of the components requiring insulation. The insulating plate 332 may have one or more through-holes formed corresponding to the positions of the terminal hole and vent hole of the cap plate 310. A portion of the current collector part 340 may be disposed below the insulating plate 332.

The pin insulator 334 is used to insulate the terminal pin 322 of the terminal part 340 and the cap plate 310 from each other, and has a substantially cylindrical shape.

The upper insulator 336 is disposed between the terminal plate 324 and the cap plate 310. The upper insulator 336 may be in the form of a rectangular plate corresponding to the shape of the terminal plate 324. The upper insulator 336 is formed to be larger than the terminal plate 324 and has a groove for seating of the terminal plate 324. The upper insulator 336 has a hole formed therethrough at a position corresponding to the terminal hole of the cap plate 310. The terminal pin 322 is placed in the hole.

The current collector part 340 serves to electrically connect the first or second electrode plate to the terminal part 320. The current collector part 340 may include a current collector 342 electrically connected to the terminal part 320, and a subplate 344 electrically connected to the current collector 342 and the electrode assembly 100.

The current collector 342 is made of a conductive material with a preset thickness and may be shaped by vertically bending a plate. The current collector 342 has a through-hole formed at a position corresponding to the terminal hole of the cap plate 310 and the through-hole of the insulating plate 332, and the terminal pin 322 is inserted into the through-hole of the current collector 342. Based on the bent part of the current collector 342, the upper side of the bent part is defined as an upper part, and the downwardly extending portion from the bent part is defined as a lower part. A portion of the upper part of the current collector 342 is insulated by contact with the lower surface of the insulating plate 332. The outer surface of the lower part of the current collector 342 is in contact with one side of the subplate 344. The current collector 342 and the subplate 344 form a joint. The current collector 342 and the subplate 344 may be connected by laser welding or the like.

The subplate 344 is made of a conductive material with a preset width and length, and the subplate 344 may have a substantially plate shape. One end (upper end) of the subplate 344 may be welded in contact with the lower part of the current collector 342. If the surface of the subplate 344 facing the electrode assembly 100 is defined as an inner surface and the surface of the subplate 344 facing the short side of the casing 200 is defined as an outer surface, the positive or negative electrode tab 110 of the electrode assembly 100 may be connected to the inner surface. The connection part of the subplate 344 to the current collector 342 may be defined as a first connection part 344a, and the connection part of the subplate 344 to the electrode tab 110 may be defined as a second connection part 344b. The subplate 344 may be configured such that the first connection part 344a and the second connection part 344b are bent at a predetermined angle. By way of example, the second connection part 344b may be disposed such that its inner surface is bent from the first connection part 344a toward the electrode assembly 100 and is located on the same plane as the inner surface of the current collector 342. Alternatively, the second connection part 344b may be disposed such that its inner surface is further into the electrode assembly 100 than the inner surface of the current collector 342. The inner surface of the second connection part 344b may be connected to the electrode tab 110 by welding. Accordingly, the vertical length of the second connection part 344b may correspond to or be slightly larger than the vertical length of the electrode tab 110. The width of the second connection part 344b may also correspond to or be slightly larger than the width of individual electrode tabs 110 welded together. In addition, the second connection part 344b may have a plurality of concave welding grooves 344c formed on the outer surface thereof. The plurality of welding grooves 344c may be formed in the width direction of the second connection part 344b in FIGS. 2A and 2B. The weld between the second connection part 344b and the electrode tab 110 may be formed on each of the welding grooves 344c.

As described above, the secondary battery includes various components that connect the terminal part 320 and the electrode assembly 100, and these components can generate a lot of heat.

In particular, a great amount of heat is generated at the joint where the current collector 342 and the subplate 344 of the current collector part 340 are coupled to each other. This joint is a region with increased resistance due to welding and geometric features (bending), which inevitably generates heat. This generation of heat may cause damage to the current collector part 340, and when the temperature inside the secondary battery reaches about 80 degrees Celsius, the electrolyte begins to decompose, which may affect the performance of the secondary battery.

Therefore, a heat transfer device according to embodiments of the present invention may be provided to prevent breakage due to generation of heat or degradation in performance of the secondary battery. Hereinafter, the heat transfer device according to the embodiments of the present invention and the secondary battery including the same will be described.

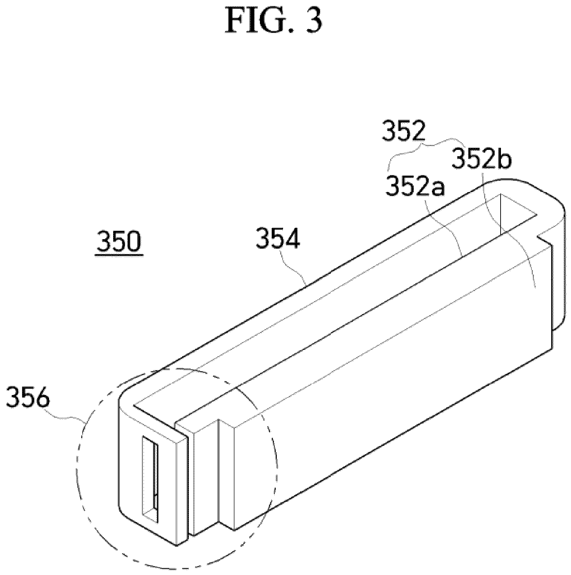

FIG. 3 is a view schematically illustrating a heat transfer device according to first embodiments of the present invention.

Referring to FIG. 3, the heat transfer device, which is designated by reference numeral 350, according to the first embodiments of the present invention includes a first body 352 installed between the casing 200 and the joint between the current collector 342 and the subplate 344 in the secondary battery. The heat transfer device may further include a second body 354 extending from the first body 352 to surround the joint, and a fastener 356 that fastens the first body 352 and the second body 354 to prevent separation of the first body 352 and the second body 354 from the joint.

The first body 352 may include a first contact surface 352a that is in contact with the joint to receive heat from the joint, and a second contact surface 352b that is formed opposite to the first contact surface 352a and is in contact with the casing 200 to transfer heat from the first contact surface 352a to the casing 200.

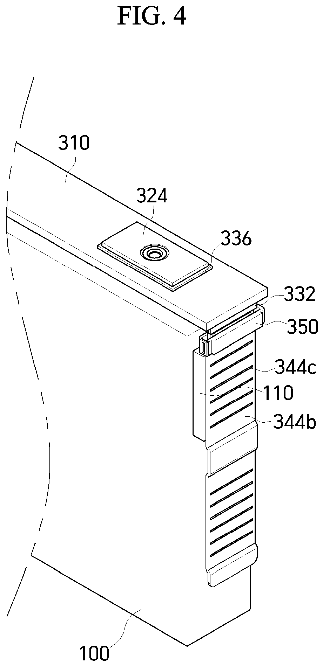

FIG. 4 is a view illustrating a state of application of the heat transfer device according to embodiments of the present invention to the secondary battery.

Referring to FIG. 4, the heat transfer device 350 according to the embodiments of the present invention is applied to the secondary battery so as to surround the joint between the current collector 342 and the subplate 344. The heat transfer device 350 may be fixed in such a manner that the first body 352 and the second body 354 surround the joint and are fastened by the fastener 356. In other words, the first body 352 and the second body 354 form a receptacle or a space in which the joint is received or arranged.

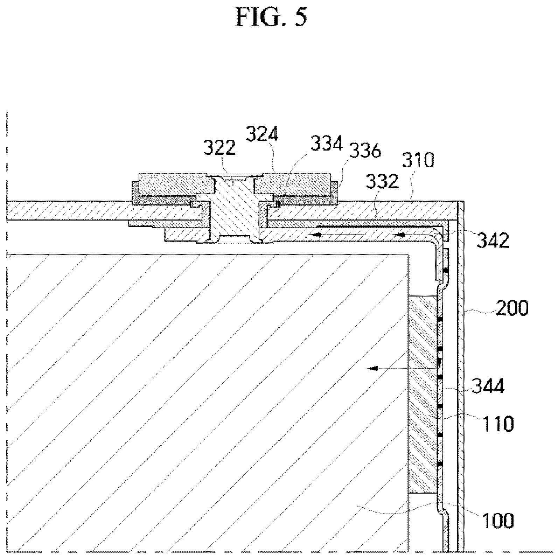

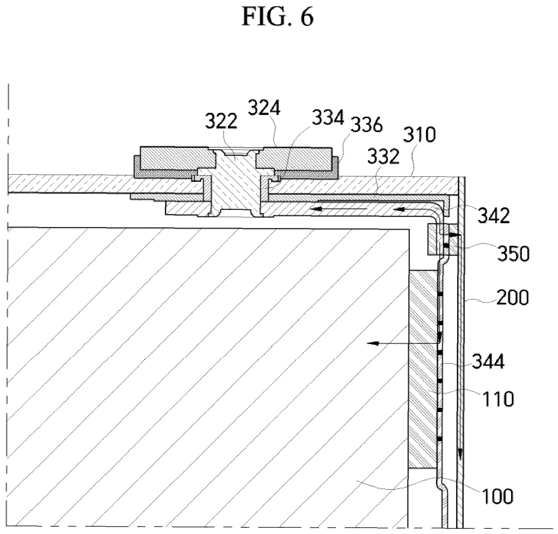

FIG. 5 is a view illustrating transfer of heat without application of the heat transfer device according to embodiments of the present invention. FIG. 6 is a view illustrating transfer of heat with application of the heat transfer device according to embodiments of the present invention.

Referring to FIG. 5, if the heat transfer device 350 according to the embodiments of the present invention is not applied, then the heat generated at the joint between the current collector 342 and the subplate 344 is transferred back to the terminal part 320 through the current collector 342 or transferred to the electrode assembly 100 through the electrode tab 110 via the subplate 344, which in turn may not allow heat to be radiated to the outside. Eventually, it may result in breakage due to generation of heat and/or degradation in performance of the secondary battery due to decomposition of electrolyte.

On the other hand, referring to FIG. 6, if the heat transfer device 350 according embodiments of the present invention is applied, the heat generated at the joint between the current collector 342 and the subplate 344 is transferred to the casing 200 through the first contact surface 352a, which is in contact with the joint, and the second contact surface 352b, which is in contact with the casing 200, of the heat transfer device 350, which in turn may significantly reduce the amount of heat transferred to the current collector 342 and the electrode assembly 100. Since the casing 200 is made of a material with high thermal conductivity, such as aluminum, aluminum alloy, or nickel-plated steel, it can effectively release heat from the joint into the air around the battery.

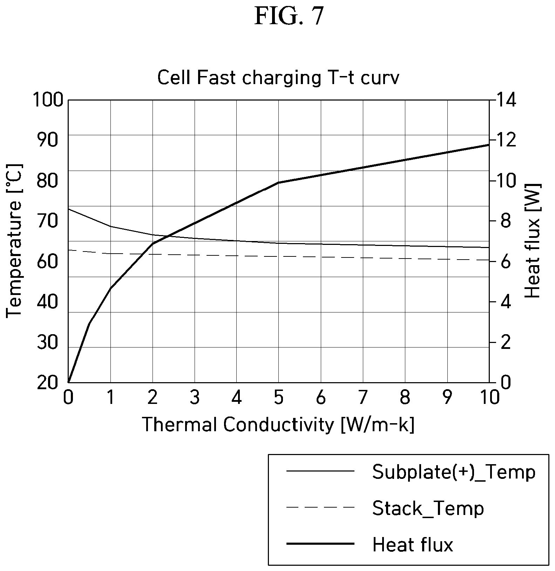

FIG. 7 is a graph illustrating a relationship between maximum temperature and heat flux with respect to the thermal conductivity of the heat transfer device according to embodiments of the present invention.

The heat transfer device 350 according to embodiments of the present invention may be made of at least one material selected from polycarbonate (PC) and polyphenylene sulfide (PPS) in order to effectively transfer heat. The heat transfer device 350 may have a thermal conductivity of 0.2 to 2 W/(m*K) if it is made of PC, and a thermal conductivity of 0.3 to 10 W/(m*K) if it is made of PPS.

The following Table 1 shows the results of measuring the change in temperature during rapid charging of the secondary battery depending on whether to apply the heat transfer device 350 and the thermal conductivity of the heat transfer device 350, and FIG. 7 is a graphical representation of Table 1 below.

**[Table 1]**

| | Thermal Conductivity [W/(m*K)] | Max Temperature [°C] | | | | | Max Heat Flux [W] |
|---|---|---|---|---|---|---|---|
| | | CC **(+)** | CC **(-)** | Subplate **(+)** | Subplate **(-)** | Stack | |
| Non-application of Heat Transfer Device | 0 | 68.74 | 65.05 | 68.67 | 64.10 | 57.52 | 0 |
| Application of Heat Transfer Device | 0.5 | 67.16 | 64.73 | 66.80 | 63.66 | 57.10 | 2.89 |
| | 1 | 64.46 | 62.34 | 64.20 | 61.41 | 56.47 | 4.68 |
| | 2 | 61.95 | 60.05 | 61.71 | 59.09 | 55.83 | 6.87 |
| | 5 | 59.37 | 57.76 | 59.35 | 56.69 | 55.11 | 9.89 |
| | 10 | 58.08 | 56.87 | 58.21 | 55.55 | 54.70 | 11.81 |

Referring to Table 1 and FIG. 7, the dissipation of the overall amount of heat inside **the secondary** battery through the heat transfer device 350 is expected to converge or at least stabilize at a thermal conductivity of 10 W/(m*K) or more, since the gradient decreases. For the maximum temperature, it can be seen that convergence is observed at a thermal conductivity of 5 W/(m*K).

It was confirmed from Table 1 and FIG. 7 that the internal temperature of the secondary battery could be lowered by attaching the heat transfer device 350 in the secondary battery. Accordingly, the heat transfer device 350 may have a thermal conductivity of 2 W/(m*K) or more and may be made of PC or PPS with low reactivity with the electrolyte.

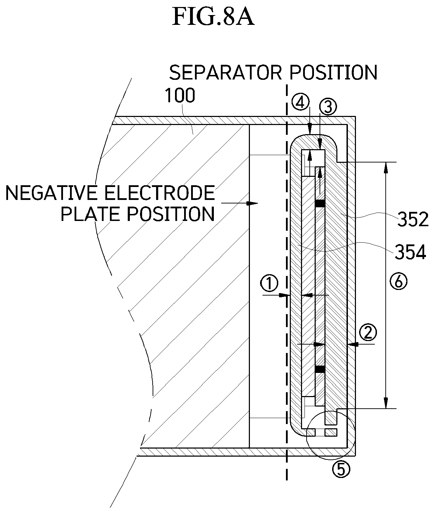

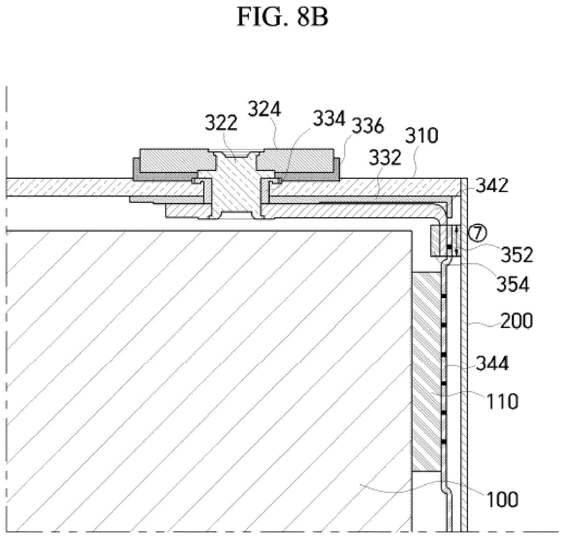

FIGS. 8A and 8B are views illustrating dimensions preferably to be considered in the heat transfer device according to embodiments of the present invention.

The heat transfer device 350 according to the embodiment of the present invention may consider seven dimensions in manufacturing, which are shown by numbers in FIGS. 8A and 8B.

Referring to FIG. 8A, a first dimension, number ①, refers to a dimension of the thickness of the second body 354, which may be less than the distance between the separator of the electrode assembly 100 and the joint between the current collector 342 and the subplate 344 since the separator should not be pressed in consideration of safety. A second dimension, Number ②, refers to a dimension of the thickness of the first body 352, which may exactly match to the distance between the casing 200 and the joint between the current collector 342 and the subplate 344 to effectively transfer heat from the joint to the casing. A third dimension, Number ③, refers to a dimension of the distance between the joint and the heat transfer device 350 at the connection between the first body 352 and the second body 354, which is not in contact with the casing 200, thereby resulting in interference with dissipation of heat and causing a risk of breakage. Hence, some clearance is may be provided at this region. A fourth dimension, Number ④, refers to a dimension of the thickness of the connection between the first body 352 and the second body 354, which may be set so as not to be in contact with the casing 200. A fifth **dimension,** Number ⑤, refers to the fastener of the heat transfer device 350, which may have a thickness set so as not to be in contact with the casing 200 like the dimension in number ④. A sixth dimension, Number ⑥, refers to a dimension of the thickness of the part of the first body 352 that is in contact with the casing 200, which may be less than the length of the straight part of the casing 200 in the cross section thereof since it should not be affected by the curved surface of the casing 200.

Referring to FIG. 8B, a seventh dimension, number ⑦, refers to a dimension of the height of the first body 352, which may be less than the length of the joint where the current collector 342 and the subplate 344 are welded.

Among the seven dimensions of the heat transfer device 350 according to the embodiments of the present invention, the factors related to heat conduction performance are dimensions in numbers @, @, and ⑦. The amount of heat conduction Q may be expressed by the following Equation: [Equation 1] $Q = λ \frac{F ⋅ Δ t}{l}$ **where Q** is an amount of heat conduction during 1 hour [kcal/h], F is a heat transfer area [m²], λ is a thermal conductivity [kcal/(m*h*°C)], Δt is a difference in temperature [°C], and *l* is a length (thickness) [m].

According to the above Equation, the larger the dimensions in numbers ⑥ and ⑦ and the smaller the dimension in number ②, the greater the amount of heat conduction. The dimension in number ② has already been determined at the stage of cell design, but the heat conduction performance increases N times as the size of the cross-sectional area of ⑥ x ⑦ increases N times. Therefore, heat conduction can be maximized by maximizing the size of the dimensions in numbers ⑥ and ⑦ when manufacturing the heat transfer device 350.

A method of manufacturing a secondary battery including the heat transfer device 350 having the above-described structure will now be described.

According to one or more embodiments of the method of manufacturing a secondary battery, an electrode assembly 100 is manufactured, a casing 200 to accommodate the electrode assembly 100 is manufactured, and a terminal part 320 connected to the electrode assembly 100 is manufactured. A current collector 342 and a subplate 344, which connect the electrode assembly 100 and the terminal part 320, are then coupled. In this case, the current collector 342 and the subplate 344 may be coupled by laser welding or the like. The heat transfer device 350 may then be installed between the casing 200 and the joint between the current collector 342 and the subplate 344 to transfer heat generated at the joint to the casing 200.

In one embodiment, the heat transfer device 350 may be in the form of a clip including the first body 352, the second body 354, and the fastener 356 illustrated in and described with reference to FIG. 3. In this case, the method of manufacturing a secondary battery may include a process of installing the heat transfer device 350, which may be accomplished by manufacturing the heat transfer device 350 in the form of a clip that surrounds the joint between the current collector 342 and the subplate 344, and fastening the heat transfer device 350 to the joint.

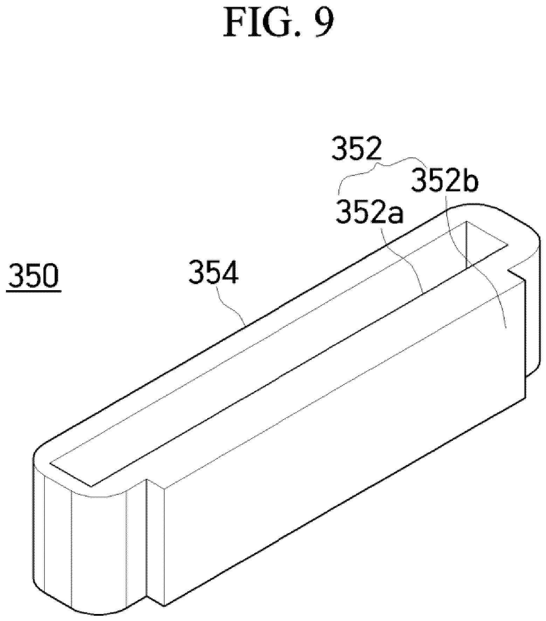

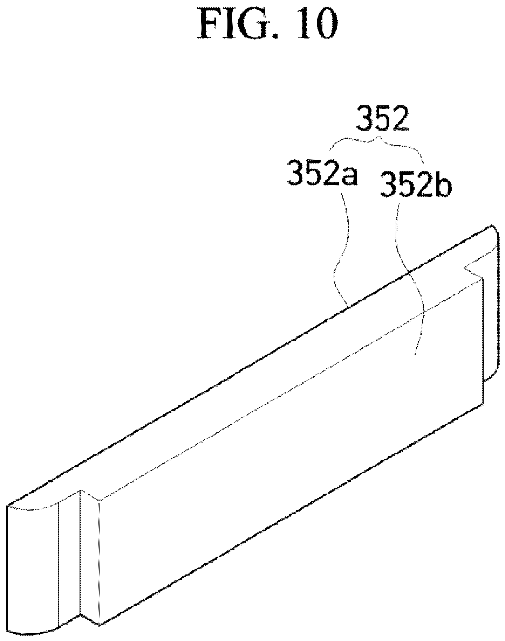

FIGS. 9 and 10 illustrate heat transfer devices according to second and third embodiments of the present invention, and a method of manufacturing a secondary battery including the same will be described.

FIG. 9 is a view schematically illustrating a heat transfer device according to the second embodiments of the present invention.

In this embodiment, the heat transfer device, which is designated by reference numeral 350, may be produced by insert injection molding between the casing 200 and the joint between the current collector 342 and the subplate 344.

Referring to FIG. 9, the heat transfer device 350 is produced by coupling the current collector 342 and the subplate 344, and then by insert injection molding between the joint therebetween and the casing 200. Accordingly, the heat transfer device 350 includes only a first body 352 and a second body 354, and does not include the fastener 356 described in the above embodiment.

FIG. 10 is a view schematically illustrating a heat transfer device according to the third embodiments of present invention.

Referring to Figure 10, the heat transfer device, which is designated by reference numeral 350, according to the third embodiments of the present invention includes only a first body 352, and does not include the second body 354 and the fastener 356 described in the above embodiments.

In this case, the method of manufacturing a secondary battery may include a process of installing the heat transfer device 350, which may be accomplished by manufacturing the heat transfer device 350, applying a heat conductive adhesive to the heat transfer device 350, and attaching the heat transfer device 350 to the joint between the current collector 342 and the subplate 344.

Since the method of manufacturing other components, the method of coupling the current collector 342 and the subplate 344, and the like correspond to the structure of the secondary battery described above, a description thereof will be omitted.

Hereinafter, examples of materials that are usable for manufacturing the secondary battery according to the present disclosure will be described.

A compound capable of reversibly intercalating/deintercalating lithium (e.g., lithiated intercalation compound) may be used as the positive electrode active material. Specifically, one or more of composite oxides of lithium and metal selected from the group consisting of cobalt, manganese, nickel, and combinations thereof may be used.

Examples of the composite oxides may include a lithium transition metal composite oxide, such as a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0 < a < 2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8).

In the above formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

A positive electrode for lithium secondary batteries may include a current collector and a positive electrode active material layer formed on the current collector. The positive electrode active material layer may include a positive electrode active material and may further include a binder and/or a conductive material.

The positive electrode active material may be contained in an amount of about 90 wt % to about 99.5 wt % on the basis of 100 wt % of the positive electrode active material layer. The binder and the conductive material may each be contained in an amount of about 0.5 wt % to about 5 wt % on the basis of 100 wt % of the positive electrode active material layer.

The current collector may be made of aluminum (Al), but the present disclosure is not limited thereto.

The negative electrode active material may include a material capable of reversibly intercalating/deintercalating lithium ions, a lithium metal, an alloy of lithium metal, a material capable of being doped and undoped in lithium, or a transition metal oxide.

Examples of the material capable of reversibly intercalating/deintercalating lithium ions may include a carbon-based negative electrode active material, such as crystalline carbon, amorphous carbon, or a combination thereof. Examples of the crystalline carbon may include graphite, such as natural graphite or artificial graphite. Examples of the amorphous carbon may include soft carbon or hard carbon, meso-phase pitch carbide, and calcined coke.

A Si-based negative electrode active material or a Sn-based negative electrode active material may be used as the material capable of being doped and undoped in lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to an implementation, the silicon-carbon composite may be in the form of silicon particles and amorphous carbon coated on the surface of the silicon particles.

The silicon-carbon composite may further include crystalline carbon. For example, the silicon-carbon composite may include a core containing crystalline carbon and silicon particles and an amorphous carbon coating layer on the surface of the core.

A negative electrode for lithium secondary batteries may include a current collector and a negative electrode active material layer formed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

The binder may be a non-aqueous binder, an aqueous binder, a dry binder, or a combination thereof. When the aqueous binder is used as the negative electrode binder, it may further include a cellulose-based compound capable of imparting viscosity.

The negative electrode current collector may be selected from the group consisting of copper foil, nickel foil, stainless steel foil, titanium foil, nickel foam, copper foam, a polymer substrate coated with conductive metal, and combinations thereof.

An electrolyte for lithium secondary batteries may include a non-aqueous organic solvent and a lithium salt.

The non-aqueous organic solvent acts as a medium through which ions involved in the electrochemical reaction of the battery are able to migrate.

The non-aqueous organic solvent may be a carbonate-based, ester-based, ether-based, ketone-based, or alcohol-based solvent, an aprotic solvent, or a combination thereof, and may be used alone or in combination of two or more.

When the carbonate-based solvent is used as the non-aqueous organic solvent, a mixture of cyclic carbonate and chain carbonate may be used.

Depending on the type of lithium secondary battery, a separator may be present between the positive electrode and the negative electrode. The separator may be a polyethylene film, a polypropylene film, a polyvinylidene fluoride film, or a multilayer film of two or more layers thereof.

The separator may include a porous substrate, and a coating layer containing an organic material, an inorganic material, or a combination thereof on one or both surfaces of the porous substrate.

The organic material may include a polyvinylidene fluoride-based polymer or a (meth)acrylic-based polymer.

The inorganic material may include inorganic particles selected from the group consisting of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but the present disclosure is not limited thereto.

The organic material and the inorganic material may be mixed in one coating layer or may be in the form of a coating layer containing an organic material and a coating layer containing an inorganic material that are laminated on each other.

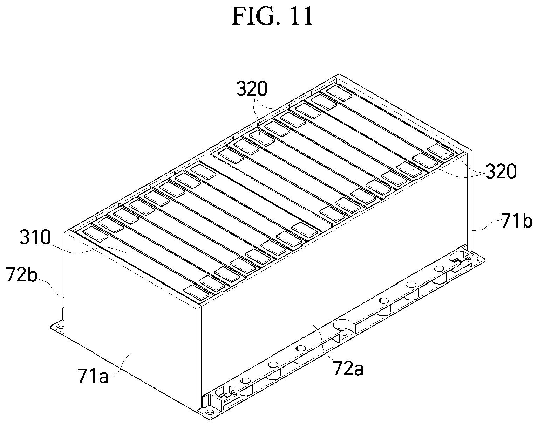

FIG. 11 is an exemplary view of a secondary battery module in which secondary batteries (as illustrated in FIG. 4) are arranged according to an embodiment of the present disclosure. With the increase in secondary battery capacity for driving electric vehicles, the secondary battery module is manufactured by arranging and connecting multiple secondary battery cells transversely and/or longitudinally.

The plurality of secondary batteries are arranged in a space defined by a pair of opposing end plates 71a and 71b and a pair of opposing side plates 72a and 72b. The secondary batteries may be designed appropriately in arrangement (direction) and number to obtain desired voltage and current specifications.

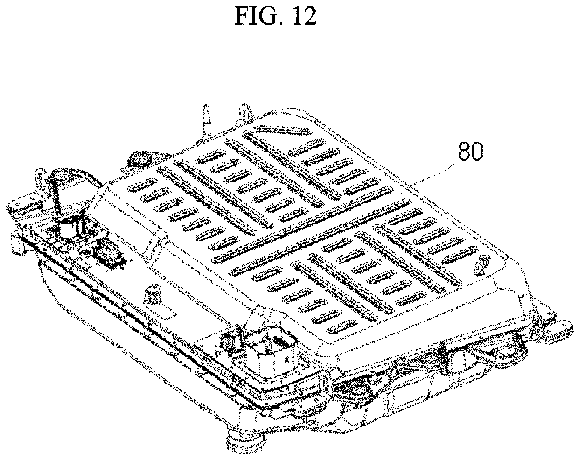

FIG. 12 is an exemplary view of a secondary battery pack 80 configured to apply the secondary battery module illustrated in FIG. 11 to an actual product (e.g., vehicle).

The secondary battery pack may be manufactured by embedding a number of secondary battery modules in a pack housing designed for mounting on the actual product. The pack housing may include a fastener and an electrical outlet necessary for mounting on the product. For convenience of illustration, associated elements, such as bus bars, cooling units, and external terminals for electrical connection of secondary batteries, are not illustrated in FIG. 12.

The secondary battery pack may be mounted in a vehicle. The vehicle may be, for example, an electric vehicle, a hybrid vehicle, or a plug-in hybrid vehicle. The vehicle may be a four-wheeled vehicle or a two-wheeled vehicle.

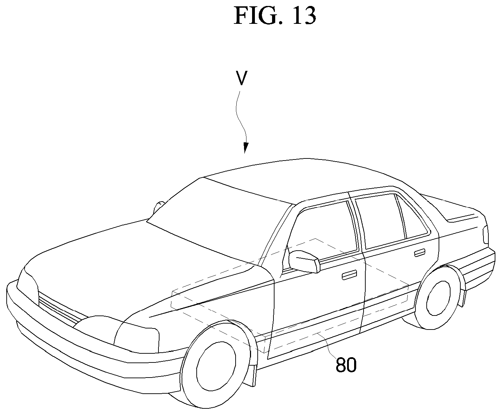

FIG. 13 is a view for explaining a vehicle V including the secondary battery pack illustrated in FIG. 12. FIG. 13 illustrates that the secondary battery pack 80 according to the embodiment of the present disclosure is mounted on the underbody of the vehicle V. The vehicle V may operate by power supplied from the secondary battery pack 80 according to the embodiment of the present disclosure.

## Claims

1. A secondary battery with a heat transfer device (350), comprising:
a casing (51, 200) configured to accommodate an electrode assembly (40, 100);
a terminal part (320) connected to the electrode assembly (40, 100);
a subplate (344) connecting the electrode assembly (40, 100) and the terminal part (320);
a current collector (342); and
the heat transfer device (350) installed between the casing (51, 200) and a joint between the current collector (342) and the subplate (344), the heat transfer device being configured to transfer heat from the joint to the casing (51, 200),
wherein the heat transfer device (350) comprises a first body (352) installed between the joint and the casing (51, 200), and wherein the first body (352) comprises:
a first contact surface (352a) in contact with the joint and configured to receive heat from the joint; and
a second contact surface (352b) formed opposite the first contact surface (352a), the second contact surface (352b) being in contact with the casing (51, 200) and being configured to transfer heat from the first contact surface (352a) to the casing (51, 200).

2. The secondary battery according to claim 1, the heat transfer device (350) further comprising a second body (354) extending from the first body (352) and being configured to surround the joint.

3. The secondary battery according to claim 2, the heat transfer device (350) further comprising a fastener (356) configured to fasten the first body (352) and the second body (354) to prevent separation of the first body (352) and the second body (354) from the joint.

4. The secondary battery according to any of claims 1 to 3, wherein the heat transfer **device** (350) is made of at least one material selected from polycarbonate, PC, and polyphenylene sulfide, PPS.

5. The secondary battery according to claim 4, wherein the heat transfer device (350) has a thermal conductivity of 0.2 to 2 W/(m*K) if it is made of polycarbonate, and a thermal conductivity of 0.3 to 10 W/(m*K) if it is made of polyphenylene sulfide.

6. The secondary battery according to claim 4, wherein the heat transfer device (350) has a thermal conductivity of 2 W/(m*K) or more.

7. The secondary battery according to any of claims 1 to 6, wherein the heat transfer device is made of at least one material having a thermal conductivity of 0.2 to 10 W/(m*K), preferably 2.0 to 10 W/(m*K), more preferably 5.0 to 10 W/(m*K).

8. The secondary battery according to any one of claims 1 to 7, wherein the heat transfer device (350) comprises a second body (354) extending from the first body (352) to surround the joint.

9. The secondary battery according to any of claims 1 to 8, wherein the secondary battery is a prismatic secondary battery.

10. The secondary battery according to any of claims 1 to 9, wherein the heat transfer device (350) has one or more of the following dimensions:
a first dimension (①) which refers to a dimension of the thickness of the second body (354), is less than the distance between a separator of the electrode assembly (40, 100) and the joint between the current collector (342) and the subplate (344),
**a second** dimension (②), which refers to a dimension of the thickness of the first body (352), matches the distance between the casing (51, 200) and the joint between the current collector (342) and the subplate (344),
a third dimension, (③), which refers to a dimension of the distance between the joint and the heat transfer device (350) at a connection between the first body (352) and the second body (354) and the casing (200), is designed so that the joint and the heat transfer device (350) at the connection between the first body (352) and the second body (354) and the casing (200) are spaced apart,
a fourth dimension (④), which refers to a dimension of the thickness of a connection between the first body (352) and the second body (354), is set so as not to be in contact at this area with the casing (200),
a fifth dimension (⑤), which refers to the fastener (356) of the heat transfer device (350), has a thickness set so as not to be in contact with the casing (51, 200),
a sixth dimension (⑥), which refers to a dimension of the thickness of a part of the first body (352) that is in contact with the casing (200), is less than the length of a straight part of the casing (51, 200) in the cross section thereof, and/or
a seventh dimension (⑦), which refers to a dimension of a height of the first body (352), is less than the length of the joint where the current collector (342) and the subplate (344) are connected.

11. A secondary battery module comprising a plurality of the secondary batteries comprising the heat transfer device according to any one of claims 1 to 10, wherein the plurality of secondary batteries is arranged and connected transversely or longitudinally.

## Patentansprüche

1. Sekundärbatterie mit einer Wärmeübertragungsvorrichtung (350), umfassend:
ein Gehäuse (51, 200), das zur Aufnahme einer Elektrodenanordnung (40, 100) konfiguriert ist;
ein mit der Elektrodenanordnung (40, 100) verbundenes Anschlussteil (320);
eine Unterplatte (344), die die Elektrodenanordnung (40, 100) und das Anschlussteil (320) verbindet;
einen Stromkollektor (342); und
die Wärmeübertragungsvorrichtung (350), die zwischen dem Gehäuse (51, 200) und einer Verbindungsstelle zwischen dem Stromkollektor (342) und der Unterplatte (344) angeordnet ist, wobei die Wärmeübertragungsvorrichtung dazu konfiguriert ist, Wärme von der Verbindungsstelle an das Gehäuse (51, 200) zu übertragen,
wobei die Wärmeübertragungsvorrichtung (350) einen ersten Körper (352) umfasst, der zwischen der Verbindungsstelle und dem Gehäuse (51, 200) angeordnet ist, und wobei der erste Körper (352) Folgendes umfasst:
eine erste Kontaktfläche (352a), die mit der Verbindungsstelle in Kontakt steht und dazu konfiguriert ist, Wärme von der Verbindungsstelle aufzunehmen; und
eine zweite Kontaktfläche (352b), die gegenüber der ersten Kontaktfläche (352a) ausgebildet ist, wobei die zweite Kontaktfläche (352b) mit dem Gehäuse (51, 200) in Kontakt steht und dazu konfiguriert ist, Wärme von der ersten Kontaktfläche (352a) an das Gehäuse (51, 200) zu übertragen.

2. Sekundärbatterie nach Anspruch 1, wobei die Wärmeübertragungsvorrichtung (350) ferner einen zweiten Körper (354) umfasst, der sich vom ersten Körper (352) erstreckt und so konfiguriert ist, dass er die Verbindungsstelle umgibt.

3. Sekundärbatterie nach Anspruch 2, wobei die Wärmeübertragungsvorrichtung (350) ferner ein Befestigungselement (356) umfasst, das dazu konfiguriert ist, den ersten Körper (352) und den zweiten Körper (354) zu befestigen, um eine Trennung des ersten Körpers (352) und des zweiten Körpers (354) von der Verbindungsstelle zu verhindern.

4. Sekundärbatterie nach einem der Ansprüche 1 bis 3, wobei die Wärmeübertragungsvorrichtung (350) aus mindestens einem Material besteht, das aus Polycarbonat, PC, und Polyphenylensulfid, PPS, ausgewählt ist.

5. Sekundärbatterie nach Anspruch 4, wobei die Wärmeübertragungsvorrichtung (350) eine Wärmeleitfähigkeit von 0,2 bis 2 W/(m*K) aufweist, wenn sie aus Polycarbonat besteht, und eine Wärmeleitfähigkeit von 0,3 bis 10 W/(m*K), wenn sie aus Polyphenylensulfid besteht.

6. Sekundärbatterie nach Anspruch 4, wobei die Wärmeübertragungsvorrichtung (350) eine Wärmeleitfähigkeit von 2 W/(m*K) oder mehr aufweist.

7. Sekundärbatterie nach einem der Ansprüche 1 bis 6, wobei die Wärmeübertragungsvorrichtung aus mindestens einem Material mit einer Wärmeleitfähigkeit von 0,2 bis 10 W/(m*K), vorzugsweise 2,0 bis 10 W/(m*K), noch bevorzugter 5,0 bis 10 W/(m*K), besteht.

8. Sekundärbatterie nach einem der Ansprüche 1 bis 7, wobei die Wärmeübertragungsvorrichtung (350) einen zweiten Körper (354) umfasst, der sich vom ersten Körper (352) erstreckt, um die Verbindungsstelle zu umschließen.

9. Sekundärbatterie nach einem der Ansprüche 1 bis 8, wobei die Sekundärbatterie eine prismatische Sekundärbatterie ist.

10. Sekundärbatterie nach einem der Ansprüche 1 bis 9, wobei die Wärmeübertragungsvorrichtung (350) eine oder mehrere der folgenden Abmessungen aufweist:
eine erste Abmessung (①), die sich auf eine Abmessung der Dicke des zweiten Körpers (354) bezieht und kleiner ist als der Abstand zwischen einem Separator der Elektrodenanordnung (40, 100) und der Verbindungsstelle zwischen dem Stromkollektor (342) und der Unterplatte (344),
eine zweite Abmessung (②), die sich auf eine Abmessung der Dicke des ersten Körpers (352) bezieht und dem Abstand zwischen dem Gehäuse (51, 200) und der Verbindungsstelle zwischen dem Stromkollektor (342) und der Unterplatte (344) entspricht,
eine dritte Abmessung (③), die sich auf eine Abmessung des Abstands zwischen der Verbindungsstelle und der Wärmeübertragungsvorrichtung (350) an einer Verbindung zwischen dem ersten Körper (352) und dem zweiten Körper (354) sowie dem Gehäuse (200) bezieht und so ausgelegt ist, dass die Verbindungsstelle und die Wärmeübertragungsvorrichtung (350) an der Verbindung zwischen dem ersten Körper (352) und dem zweiten Körper (354) sowie dem Gehäuse (200) voneinander beabstandet sind,
eine vierte Abmessung (④), die sich auf eine Abmessung der Dicke einer Verbindung zwischen dem ersten Körper (352) und dem zweiten Körper (354) bezieht und so festgelegt ist, dass in diesem Bereich kein Kontakt mit dem Gehäuse (200) besteht,
eine fünfte Abmessung ( ⑤ ), die sich auf das Befestigungselement (356) der Wärmeübertragungsvorrichtung (350) bezieht und eine Dicke aufweist, die so festgelegt ist, dass kein Kontakt mit dem Gehäuse (51, 200) besteht,
eine sechste Abmessung (⑥), die sich auf eine Abmessung der Dicke eines Teils des ersten Körpers (352), der mit dem Gehäuse (200) in Kontakt steht, bezieht und kleiner ist als die Länge eines geraden Teils des Gehäuses (51, 200) in dessen Querschnitt, und/oder
eine siebte Abmessung (⑦), die sich auf eine Abmessung einer Höhe des ersten Körpers (352) bezieht und kleiner ist als die Länge der Verbindungsstelle, an der der Stromkollektor (342) und die Unterplatte (344) verbunden sind.

11. Sekundärbatteriemodul, umfassend eine Vielzahl der Sekundärbatterien, die die Wärmeübertragungsvorrichtung nach einem der Ansprüche 1 bis 10 umfassen, wobei die Vielzahl von Sekundärbatterien quer oder längs angeordnet und verbunden sind.

## Revendications

1. Batterie secondaire avec un dispositif de transfert de chaleur (350), comportant:
un boîtier (51, 200) configuré pour accueillir un ensemble d'électrodes (40, 100);
une partie terminale (320) reliée à l'ensemble d'électrodes (40, 100);
une embase (344) reliant l'ensemble d'électrodes (40, 100) et la partie terminale (320);
un collecteur de courant (342); et
le dispositif de transfert de chaleur (350) installé entre le boîtier (51, 200) et un joint entre le collecteur de courant (342) et l'embase (344), le dispositif de transfert de chaleur étant configuré pour transférer de la chaleur du joint au boîtier (51, 200),
dans laquelle le dispositif de transfert de chaleur (350) comporte un premier corps (352) installé entre le joint et le boîtier (51, 200), et dans laquelle le premier corps (352) comporte:
une première surface de contact (352a) en contact avec le joint et configurée pour recevoir de la chaleur du joint; et
une deuxième surface de contact (352b) formée en regard de la première surface de contact (352a), la deuxième surface de contact (352b) étant en contact avec le boîtier (51, 200) et étant configurée pour transférer de la chaleur de la première surface de contact (352a) au boîtier (51, 200).

2. Batterie secondaire selon la revendication 1, le dispositif de transfert de chaleur (350) comportant en outre un deuxième corps (354) s'étendant à partir du premier corps (352) et configuré pour entourer le joint.

3. Batterie secondaire selon la revendication 2, le dispositif de transfert de chaleur (350) comportant en outre une fixation (356) configurée pour fixer le premier corps (352) et le deuxième corps (354) pour empêcher la séparation du premier corps (352) et du deuxième corps (354) du joint.

4. Batterie secondaire selon l'une quelconque des revendications 1 à 3, dans laquelle le dispositif de transfert de chaleur (350) est constitué d'au moins un matériau choisi parmi le polycarbonate, PC, et le sulfure de polyphénylène, PPS.

5. Batterie secondaire selon la revendication 4, dans laquelle le dispositif de transfert de chaleur (350) a une conductivité thermique de 0,2 à 2 W/(m*K) s'il est constitué de polycarbonate, et une conductivité thermique de 0,3 à 10 W/(m*K) s'il est constitué de sulfure de polyphénylène.

6. Batterie secondaire selon la revendication 4, dans laquelle le dispositif de transfert de chaleur (350) a une conductivité thermique de 2 W/(m*K) ou plus.

7. Batterie secondaire selon l'une quelconque des revendications 1 à 6, dans laquelle le dispositif de transfert de chaleur est constitué d'au moins un matériau ayant une conductivité thermique de 0,2 à 10 W/(m*K), de préférence de 2,0 à 10 W/(m*K), de manière davantage préférée de 5,0 à 10 W/(m*K).

8. Batterie secondaire selon l'une quelconque des revendications 1 à 7, dans laquelle le dispositif de transfert de chaleur (350) comporte un deuxième corps (354) s'étendant à partir du premier corps (352) pour entourer le joint.

9. Batterie secondaire selon l'une quelconque des revendications 1 à 8, dans laquelle la batterie secondaire est une batterie secondaire prismatique.

10. Batterie secondaire selon l'une quelconque des revendications 1 à 9, dans laquelle le dispositif de transfert de chaleur (350) a une ou plusieurs des dimensions suivantes:
une première dimension (①), qui fait référence à une dimension de l'épaisseur du deuxième corps (354), est inférieure à la distance entre un séparateur de l'ensemble d'électrodes (40, 100) et le joint entre le collecteur de courant (342) et l'embase (344),
une deuxième dimension (②), qui fait référence à une dimension de l'épaisseur du premier corps (352), correspond à la distance entre le boîtier (51, 200) et le joint entre le collecteur de courant (342) et l'embase (344),
une troisième dimension (③), qui fait référence à une dimension de la distance entre le joint et le dispositif de transfert de chaleur (350) au niveau d'une liaison entre le premier corps (352) et le deuxième corps (354) et le boîtier (200), est conçue de sorte que le joint et le dispositif de transfert de chaleur (350) au niveau de la liaison entre le premier corps (352) et le deuxième corps (354) et le boîtier (200) soient espacés,
une quatrième dimension (④), qui fait référence à une dimension de l'épaisseur d'une liaison entre le premier corps (352) et le deuxième corps (354), est définie de manière à ne pas être en contact au niveau de cette zone avec le boîtier (200),
une cinquième dimension (⑤), qui fait référence à la fixation (356) du dispositif de transfert de chaleur (350), a une épaisseur définie de manière à ne pas être en contact avec le boîtier (51, 200),
une sixième dimension (⑥), qui fait référence à une dimension de l'épaisseur d'une partie du premier corps (352) qui est en contact avec le boîtier (200), est inférieure à la longueur d'une partie droite du boîtier (51, 200) dans la section transversale de celui-ci, et/ou
une septième dimension (⑦), qui fait référence à une dimension d'une hauteur du premier corps (352), est inférieure à la longueur du joint où le collecteur de courant (342) et l'embase (344) sont reliés.

11. Module de batterie secondaire comportant une pluralité des batteries secondaires comportant le dispositif de transfert de chaleur selon l'une quelconque des revendications 1 à 10, dans lequel la pluralité de batteries secondaires est agencée et reliée transversalement ou longitudinalement.
